# EUROPEAN PATENT APPLICATION

(11) **EP 4 703 239 A1**
(43) Date of publication of application: **04.03.2026**
(21) Application number: 24306405.2
(22) Date of filing: 28.08.2024
(51) Int. Cl.: B62D 5/30, B62D 5/093, B62D 5/07, B62D 5/06

(54) **ARRANGEMENT TO CONTROL A FLUID FLOW FOR STEERING**

(71) Applicant: Kubota Corporation, Osaka-shi, Osaka 556-8601 (JP)
(72) Inventor: CARPENTIER, Frédéric, 60800 Crépy-en-Valois (FR)
(74) Representative: Cabinet Beau de Loménie

(57) **Abstract**

An arrangement for controlling a fluid circuit's flow from alternatively a first and a second pump (4a, 4b) to a tank via steering unit (1) and steering cylinder (5) of the circuit, comprising,
a first flow path including a flow direction control device (C) for preventing a flow to a first inlet (P1) in response to a pressure difference across the device (C),
a second flow path including an emergency valve (33) for opening of the second flow path comprising and controlled via a control port (33a),
a connection between the first and the second flow path in accordance with a position of the flow direction control device (C) between the emergency valve (33) and the first inlet (P1), and
a connection for responding to a pressure drop between the first pump (4a) and the flow direction control device (C) by opening of the second flow path.

## Description

### Technical Field

The present invention relates to an arrangement for controlling flow of a fluid in a pressurized state in a fluid circuit with a steering unit, a hydraulic system and its control unit with the arrangement and a use of the arrangement.

### Background Art

A power-steering system of DE 10 257 130 A1 has metering pump arrangement with a metering motor and an output of a hydraulic pump fed to a directional flow control valve that applies a differential force to a steering actuator dependent upon the steering wheel position. Fluid is fed through a pair of pressure limiting valves. In the event that pressure of the fluid falls, the metering motor acts as a backup pump to allow steering.

An arrangement for controlling a flow of a fluid in a pressurized state in a fluid circuit is known. The fluid circuit in a commonly known manner comprises a tank for the fluid, the arrangement, pumps, a steering cylinder, and a steering unit for controlling operation of the steering cylinder by controlling discharging the fluid from the steering cylinder towards the tank and charging the fluid pressurized by one of the pumps to the steering cylinder. For example GB 2 354 499 A shows a hydraulic control arrangement including a directional valve and a metering pump unit having two hydraulically parallel connected and mechanically connected metering pumps, each metering pump having a toothed ring with inner toothing and a gear wheel with outer toothing arranged to perform rotary and orbiting movements in said toothed ring, wherein a continuous driving part is provided for both gear wheels. The hydraulic control arrangement is a steering unit comprising a shaft, a by-pass valve and a metering pump arrangement for providing the controlling of the discharging and charging via the directional valve, and comprising at least one metering pump connected to the shaft for receiving torque from a steering wheel. Operation of the directional valve allows transmitting torque from the shaft to the steering cylinder via only one of the metering pumps so as to step down a force transmission from a steering wheel at the shaft to the steering cylinder compared to the case of the hydraulically parallel connection of the two metering pumps.

### Summary of Invention

### Technical Problem

The present invention has an object of providing safety of a power steering in particular for a work vehicle with a hydraulic circuit including the power steering in a favorable manner under at least one aspect of
- safety enhancement,
- user friendliness,
- passing a homologation test, and
- cost efficiency.

### Solution to Problem

The present invention provides an arrangement for controlling a flow of a fluid in a pressurized state in a fluid circuit, in particular a hydraulic circuit. The fluid circuit comprises a tank for the fluid, the arrangement, a first and a second pump, a steering cylinder, and a steering unit for controlling operation of the steering cylinder by controlling discharging the fluid from the steering cylinder towards the tank and charging the fluid pressurized by at least one of the first and second pumps to the steering cylinder. A section of the fluid circuit formed of the steering cylinder and the steering unit may be formed as disclosed in DE 10 257 130 A1 which is hereby incorporated by reference. In the steering unit the metering pump arrangement with a metering motor of DE 10 257 130 A1 may also be replaced with the metering pump arrangement disclosed in GB 2 354 499 A which is hereby incorporated by reference.

According to the invention, the arrangement for controlling a flow of a fluid in a pressurized state in a fluid circuit comprises
a first flow path including a first inlet for receiving the fluid from the first pump and a flow direction control device (e.g. a check valve) arranged and configured to prevent a flow of the fluid to the first inlet in response to a pressure difference across the flow direction control device,
a second flow path including a second inlet for receiving the fluid from the second pump, and an emergency valve for opening of the second flow path comprising and controlled via a control port,
a flow connection between the first and the second flow path arranged in accordance with a position of the flow direction control device between the emergency valve and the first inlet,
a control connection to the control port for controlling the opening of the second flow path in response to a pressure drop in a section of the fluid circuit between the first pump and the flow direction control device. Thus, the control connection is a sensing connection sensing the pressure drop and signaling it to the control port.

Accordingly, the invention provides an arrangement for controlling a fluid circuit's flow from alternatively a first and a second pump to a tank via steering unit and steering cylinder of the circuit, comprising,
a first flow path including a flow direction control device for preventing a flow to a first inlet in response to a pressure difference across the device,
a second flow path including an emergency valve for opening of the second flow path comprising and controlled via a control port,
a connection between the first and the second flow path in accordance with a position of the flow direction control device between the emergency valve and the first inlet, and
a connection for responding to a pressure drop between the first pump and the flow direction control device by opening of the second flow path.

A unit may be provided so that the arrangement comprises ports at ends of the first and second flow paths and including the first inlet and the second inlet, wherein the first and second flow paths and the ports are provided as a valve unit for connecting to the steering unit and to the first and second pumps via conduits at the ports.

The arrangement of the invention may comprise a pressure sensor configured and arranged for sensing a pressure in said section (the section of the fluid circuit between the first pump and the flow direction control device). This pressure sensor may have a function to measure and signal the section's internal pressure and/or whether this pressure exceeds threshold, in particular a pressure threshold at which a pressure drop below the threshold triggers the opening of the second flow path. This signaling may be coupled to a central controller or monitoring unit and/or to a diagnosis signaling system for displaying a diagnosis in a cockpit and/or a remote diagnosis and/or servicing center. In this manner information may be efficiently made available to signal and/or display a failure of the function of the first pump upon a backup operation using the second flow path to charge the fluid in a pressurized state to the steering cylinder.

Preferably, the control connection comprises a fluid connection from said section and between the first inlet and the control port and the emergency valve is a pressure-controlled valve controlled by a pressure in the fluid connection, wherein the control connection may comprise a release valve arranged and controllable for linking the pressure reception port to the tank.

According to a preference, the emergency valve is an electrically actuated valve, the control port is a control port triggered by a signal and the control connection comprises a pressure sensor at said section and a signal line between the sensor and the control port. The opening of the second flow path is then triggered electrically by a signal from the sensor. Preferably this pressure sensor of the control connection is the above described pressure sensor with the function to measure and signal the pressure and/or whether the pressure threshold is exceeded and coupled to a central controller or monitoring unit and/or to a diagnosis signaling system. According to this preference a pressure sensor is efficiently providing functions of both, controlling/triggering a backup operation and signaling failure.

The arrangement of the invention may comprise a priority valve and alternative outlets wherein the priority valve is connected between the alternative outlets and the flow direction control device and configured to direct a flow of the fluid from the flow connection between the first and second flow paths alternatively to one or another one of the alternative outlets.

The priority valve may be connected to and controlled by a load-sensing fluid path in fluid communication with a load-sensing path of the steering unit, which may comprise a branch comprising the emergency valve and the emergency valve is further arranged, configured and controlled via the control port for opening the branch and opening the second flow path with parallel valve ways.

The invention also provides a hydraulic control unit comprising the arrangement of the invention and the steering unit of the fluid circuit mentioned above connected to each other for forming a section of the of the fluid circuit. The steering unit of the hydraulic control unit comprises a shaft, a by-pass valve unit and a metering pump arrangement for providing the controlling of the discharging and charging via the by-pass valve, and comprising at least one metering pump connected to the shaft for receiving torque from a steering wheel. The metering pump arrangement preferably comprises a set of two of the metering pumps and the by-pass valve to provide an emergency valve connected and configured for switching between fluidically connecting the two of the metering pumps in parallel and fluidically connecting input and output sides of one of the two of the metering pumps with each other.

The invention also provides a hydraulic system for a work vehicle (e.g. an agricultural tractor, a construction machine and in particular with a hydraulic system operable with a pump pressure in the range between 0 MPa and 30 MPa, e.g. typically between 1 MPa and 30 MPa, preferably at least 10 MPa), comprising a fluid circuit comprising
a tank for a fluid being a work fluid,
a first pump, preferably a power-steering pump, and a second pump, preferably a transmission pump, both for aspirating the fluid from the tank,
a steering cylinder,
a section between the first and second pumps and the steering cylinder, the section being the hydraulic control unit of the invention, and
a discharge conduit for discharging the fluid from the steering unit of the hydraulic control unit to the tank. Accordingly, the arrangement of the invention may be used supplying of fluid in the pressurized state to the steering unit of such a system.

The invention particularly provides a hydraulic system for a work vehicle (e.g. an agricultural tractor, a construction machine and in particular with a hydraulic system operable with a pump pressure in the range between 0 MPa and 30 MPa, e.g. typically between 1 MPa and 30 MPa, preferably at least 10 MPa), comprising a fluid circuit comprising
a tank for a fluid being a work fluid,
a first pump, preferably a power-steering pump, and a second pump, preferably a transmission pump, both for aspirating the fluid from the tank,
a steering cylinder,
a section between the first and second pumps and the steering cylinder, the section being the hydraulic control unit of the invention which has the priority valve, and
a discharge conduit for discharging the fluid from the steering unit of the hydraulic control unit to the tank. Accordingly, the arrangement of the invention may be used supplying of fluid in the pressurized state to the steering unit of such a system.

### Brief Description of Drawings

Fig. 1 illustrates a portion of a steering unit formed with hydraulic elements and connections as disclosed in DE 10 257 130 A1;
Fig. 2A illustrates a conventional priority valve unit with a pressure release valve;
Figs. 2B to 2D illustrate modifications for the priority valve unit of Fig. 2A in accordance with the invention;
Fig. 2E illustrates a possible modification for an emergency valve in the priority valve unit modification of Fig. 2C;
Fig. 3 illustrates a pressure curve observable in a control connection and a use of an arrangement of the invention; and
Fig. 4 schematically illustrates a hydraulic system according to the invention.

### Description of Embodiments

The description below deals with an example embodiment of the present invention with reference to drawings.

### [Steering Unit]

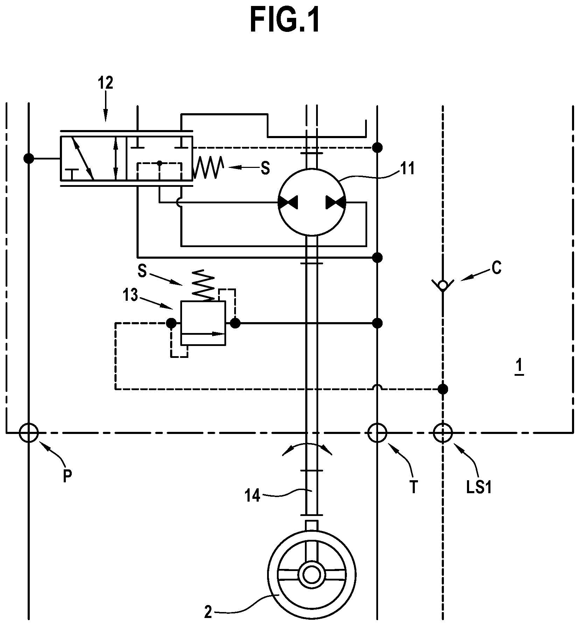

An arrangement of the invention may be connected to a conventional steering unit, e.g. from Danfoss A/S Nordborg, Denmark. Suitable for this purpose is an electro hydraulic steering unit like the steering unit OSPED from Danfoss, which electro-steering unit includes an electro-hydraulic valve to send hydraulic power from a pump to a steering cylinder under electronic control. Suitable for this purpose is also a classical mechano-hydraulic steering unit like the steering unit OSPD 60/160 from Danfoss, in which a steering wheel actuates a valve. For each of these options the arrangement for controlling a flow of a fluid in a pressurized state of the invention may be connected between the steering unit and first and second pumps to allow reliably sending hydraulic power via the invention's arrangement. Likewise an arrangement of the invention may be applied (i.e. integrated in or connected to), in particular connected to a steering unit with hydraulic flows and elements as disclosed in DE 10 257 130 A1 and in particular modified in accordance with a metering pump arrangement as disclosed in GB 2 354 499 A. A portion of this (correspondingly modified) steering unit 1 is partially shown in Fig. 1 in combination with a steering wheel 2 and with a shaft 14 being a common shaft of the steering wheel 2 and metering pumps 11 (one of which is shown in Fig. 1) of a metering pump arrangement. The steering unit 1 comprises the shaft 14, a by-pass valve 12 with a bias spring S. The metering pump arrangement controls discharging and charging of fluid via the by-pass valve 12 being an emergency valve connected and configured for switching between fluidically connecting the metering pumps 11 in parallel and fluidically connecting input and output sides of the one of the two of the metering pumps 11 visible in Fig. 1 with each other. A high pressure side of a fluid circuit with the steering unit 1 includes connecting port P of the steering unit 1 to the invention's arrangement. A low pressure side of the fluid circuit with the steering unit 1 includes connecting port T of the steering unit 1 to a tank of the circuit. Load sensing of the fluid circuit is established in a commonly known manner and through connecting port LS1 of the steering unit 1 and with a check valve C between the connecting port LS1 and a steering valve unit (not shown in Fig. 1) of the steering unit 1. A commonly known pressure limiter 13 with a bias spring S is connected in the steering unit 1 between the connecting port LS1 and the connecting port T of the steering unit 1 to a tank of the circuit. The by-pass valve 12 has and is controlled by fluid connections to each of the connecting port T of the steering unit 1 to the tank and the connecting port P of the steering unit 1 to the invention's arrangement so as to react to a collapse of a pressure difference between these ports by switching from fluidically connecting the two of the metering pumps 11 parallel to fluidically connecting input and output sides of the metering pumps 11 shown in Fig. 1 with each other. Thus a redundant safety function for a power steering to that provided by the invention's arrangement is added.

### [Priority Valve Unit]

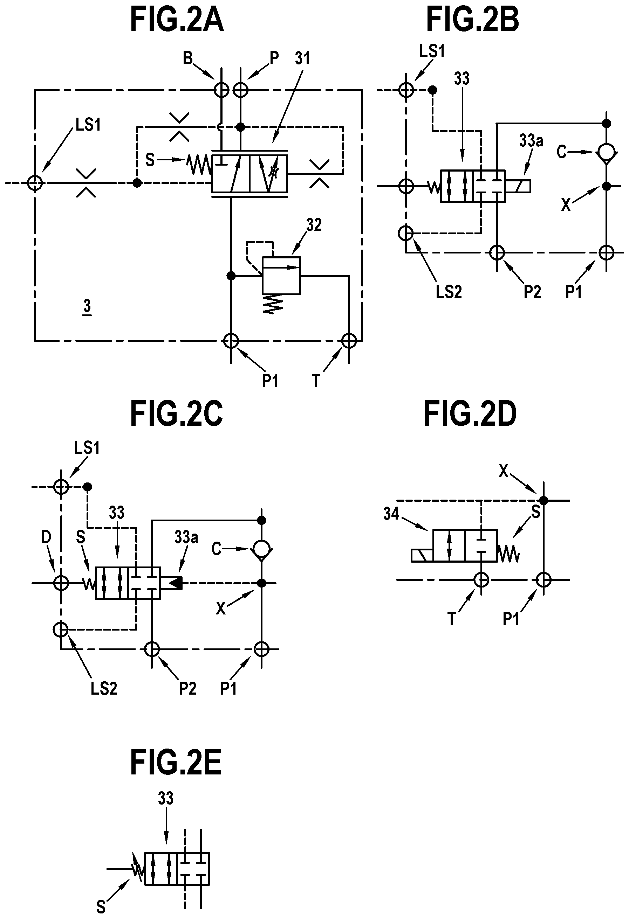

Fig. 2A illustrates a conventional priority valve unit 3 with ports P, T, and LS1 for connecting, respectively to P, T, and LS1 of the steering unit 1 shown in Fig. 1. The priority valve unit 3 comprises priority valve 31 and alternative outlets P, B, wherein the priority valve 31 is connected between the alternative outlets P, B and a first inlet port P1 of the priority valve unit 3 and configured to direct a flow of the fluid from a first inlet port P1 alternatively to one or another one of the alternative outlets P, B. The priority valve 31 is connected to and controlled by a load-sensing fluid path via port LS1 and throttles for a conventional control of the priority valve 31 depending on pressure from the load-sensing fluid path and from a bias spring S provided to the priority valve 31. A commonly known pressure limiter 32 with a bias spring S is connected in the priority valve unit 3 between the connecting port T of priority valve unit 3 to the tank of the circuit and a branching point X between the first inlet port P1 and the priority valve 31 to limit a pressure provided at the priority valve 31 and downstream of the priority valve 31 alternatively at outlet P and B.

### [Priority Valve Unit modification 1]

In an arrangement according to the invention, the features shown in Fig. 2B are added to the priority valve unit 3 shown in Fig. 2A so as to combine the features of Fig. 2A and 2B. According to this combination, the priority valve unit 3 comprises:
a first flow path including the first inlet port P1 for receiving the fluid from a first pump and a check valve C arranged and configured to prevent a flow of the fluid to the port P1 in response to a pressure difference across the check valve C,
a second flow path including a second port P2 for receiving the fluid from a second pump 4b, and an emergency valve 33 with two parallel valve ways for opening of the second flow path comprising and controlled via a control port 33a,
a flow connection between the first and the second flow path arranged in accordance with a position of the check valve C between the emergency valve 33 and the first port P1,
a control connection to the control port 33a for controlling the opening of the second flow path in response to a pressure drop at first pump 4a and the check valve C.

Accordingly, the first and second flow paths and ports are provided as a valve unit (the priority valve unit 3) for connecting to the steering unit 1 shown in Fig. 1 and to the first and second pumps via conduits at the ports P, P1, P2.

Schematically illustrated in Fig. 2B is an electrically actuated valve as the emergency valve 33, the control port 33a of which is a control port triggered by an electric signal. The control connection comprises a pressure sensor (not shown in Fig. 2B) and a signal line (not shown in Fig. 2B) between the sensor and the control port 33a. The sensor is a pressure sensor at the first pump but may also be arranged at any point between the first pump and the check valve of the priority valve unit 3. With these elements the priority valve unit 3 is thus provided with connection for responding to a pressure drop of the first pump and the check valve C by opening of the second flow path. Thus, the pressure sensor is configured and arranged for sensing a pressure between the check valve C and the first pump 4a. This pressure sensor has a function to measure and signal whether a pressure threshold is exceeded, wherein a pressure drop below the threshold triggers the opening of the second flow path. This signaling is coupled to a diagnosis signaling system for displaying a diagnosis in a cockpit and/or a remote diagnosis and/or servicing center to signal a failure of the function of the first pump upon the pressure drop. The threshold may be set between 0.4 MPa and 0.8 MPa, e.g. set to 0.5 MPa. Furthermore, a load-sensing fluid path through the above-mentioned ports LS 1 comprises in the priority valve unit 3 a branch comprising the emergency valve 33 arranged, configured and controlled via the control port 33a for opening the branch upon opening the second flow path with the parallel valve ways. Accordingly, a load-sensing path from the port LS1 of the steering unit of Fig. 1 is envisaged through port LS1 of the priority valve unit 3, the emergency valve 33 and port LS2 of the priority valve unit 3.

### [Priority Valve Unit modification 2]

In an arrangement according to the invention, the features shown in Fig. 2C are added to the priority valve unit 3 shown in Fig. 2A so as to combine the features of Fig. 2A and 2C. According to this combination, the priority valve unit 3 comprises:
a first flow path including the first inlet port P1 for receiving the fluid from a first pump and a check valve C arranged and configured to prevent a flow of the fluid to the port P1 in response to a pressure difference across the check valve C,
a second flow path including a second port P2 for receiving the fluid from a second pump 4b, and an emergency valve 33 with two parallel valve ways for opening of the second flow path comprising and controlled via a control port 33a,
a flow connection between the first and the second flow path arranged in accordance with a position of the check valve C between the emergency valve 33 and the first port P1,
a control connection to the control port 33a for controlling the opening of the second flow path in response to a pressure drop at first pump 4a and the check valve C.

Accordingly, the first and second flow paths and ports are provided as a valve unit (the priority valve unit 3) for connecting to the steering unit 1 shown in Fig. 1 and to the first and second pumps via conduits at the ports P, P1, P2.

As shown in Fig. 2C the control connection comprises a fluid connection from said branching point X to the control port 33a of the emergency valve 33 being a pressure controlled valve and next to a drain port D. The priority valve unit 3 is thus provided with connection for responding to a pressure drop of the first pump and the check valve C by opening of the second flow path. For this function a bias spring S switches the emergency valve 33 in response to the pressure drop. According to a modification option illustrated in Fig. 2E this function is adjustable with a bias spring S at the emergency valve 33, the pressing force of which is adjustable with a screw screwed through a drain hole in the priority valve unit 3 and illustrated as a drain port D in Fig. 2C. The concept shown in Fig. 2C and optionally with the modification option illustrated in Fig. 2E may be further varied by adding the features shown in Fig. 2D so as to combine the features of Fig. 2A, 2C, 2D and optionally 2E. Here the control connection comprises also a release valve 34 arranged and controllable for linking the pressure reception port 33a to the tank 6. Specifically the release valve 34 is an electrically actuated valve connected between the branching point X and the port T of the priority valve unit 3. The release valve 34 is an electrically actuated valve similar to valve 33 shown in Fig. 2B but with one way and connected differently, i.e. fluidically between the branching point X and the port T of the priority valve unit 3 and electrically to a control unit (not shown). Thus, a safety function provided with the invention can also be triggered or modulated with the release valve 34 under control of the control unit, e.g. manually from an input to the control unit from a cockpit of a work vehicle with the invention's arrangement and/or with a logic in the control unit optionally coupled to further system sensors and/or input from a remote control system for the work vehicle involving movement monitoring e.g. via GPS in a known manner.

A load-sensing fluid path through the above-mentioned ports LS1 comprises in the priority valve unit 3 a branch comprising the emergency valve 33 arranged, configured and controlled via the control port 33a for opening the branch upon opening the second flow path with the parallel valve ways. Accordingly, a load-sensing path from the port LS1 of the steering unit of Fig. 1 is envisaged through port LS1 of the priority valve unit 3, the emergency valve 33 and port LS2 of the priority valve unit 3.

### [Pressure curve]

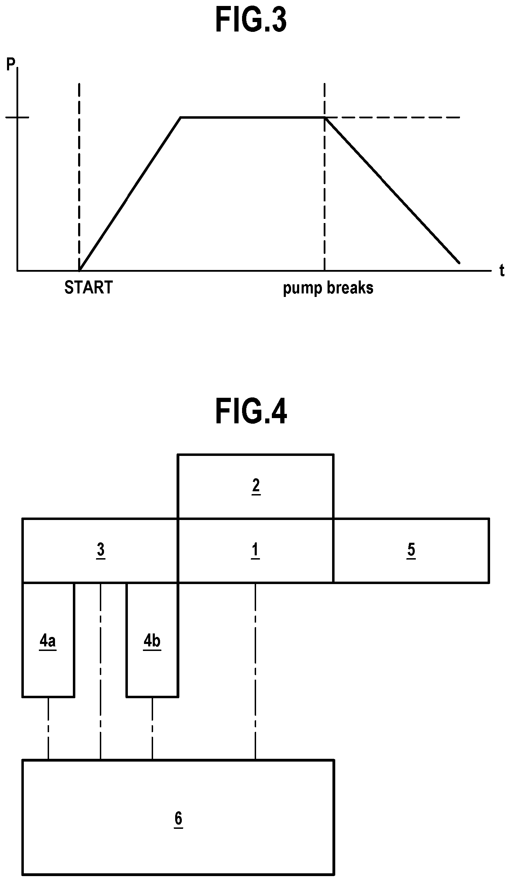

Fig. 3 shows a schematic diagram the abscissa of which indicates time and the ordinate of which illustrates pressure observed at branching point X and control port 33a of the above Priority Valve Unit modification 2 in a hydraulic circuit using the Priority Valve Unit modification 2. Vertical broken lines indicate times of a start and of an emergency event (a damage or failure) of the first pump. In particular when the first pump is a hydraulic gear pump a gear tooth may break and cause a pressure drop at the pump outlet as a failure. A pressure plateau is established by the above-mentioned pressure limiter 32 of the priority valve unit 3 in normal operation of the hydraulic circuit. In establishing the normal operation by pressurizing fluid with the first pump pressure rise and following to a termination of the normal operation due to failure of the first pump a pressure drop is observed. The invention allows using the pressure drop for triggering switching to a second pump thus causing closing the check valve of the priority valve unit 3 with the pressure from the second pump thus providing the pressure from the second pump through the second flow path with a function of directing a flow of fluid from second inlet port P2 alternatively to one or another one of the alternative outlets P, B.

### [Hydraulic Control Unit and Hydraulic System]

As apparent the steering unit 1 partially shown in Fig. 1 and a priority valve unit 3 of the invention may be combine to a hydraulic control unit by connecting them to each other for forming a section of the of the fluid circuit, wherein the steering unit 1. A hydraulic system includes the hydraulic control unit in the related above hydraulic circuit and is schematically illustrated in Fig. 4 with lines to a tank 6 of the system/circuit illustrated as broken lines. It is clear to the person skilled in the art that the system may comprise further typical elements and features of a commonly known hydraulic system for a work vehicle, like filters at in- and/or outlets of pumps for pressurizing a fluid and/or a hydraulic transmission to wheels of the work vehicle. The hydraulic system is for a work vehicle and comprises a fluid circuit with the following elements connected in line with the illustration in Fig. 4, namely:
a tank for a fluid 6 being a work fluid,
first and second pumps 4a, 4b for aspirating the fluid from the tank, wherein the first pump 4a is a power-steering pump and the second pump 4b is a transmission pump,
a steering cylinder 5,
the hydraulic control with the priority valve unit 3 and the steering unit 1 between the first and second pumps 4a, 4b and the steering cylinder 5,
discharge conduits (shown as broken lines in Fig. 4) for discharging the fluid from port T of the steering unit 1 and the priority valve unit 3 to the tank 6, and
aspiration lines from the tank 6 to the first and second pumps 4a, 4b.

A steering wheel 2 is added as also illustrated in Fig. 1.

A connection for a hydraulic brake of a trailer of the work vehicle is formed at alternative outlets B shown in Fig. 2A.

The present invention is applicable to hydraulic systems for use in not only tractors but also various other work vehicles such as combines and multipurpose work vehicles.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

### Reference signs

1 steering unit
2 steering wheel
3 valve unit
4a, 4b pumps
5 steering cylinder
6 tank for fluid
11 metering pump
12 emergency valve of steering unit
13 pressure limiter of steering unit
14 shaft
P, P1, P2, T, LS1, LS2, B ports
31 priority valve
32 pressure limiter of priority valve unit
33 emergency valve of priority valve unit
34 release valve
C check valve
S spring
X branching point

## Claims

1. An arrangement for controlling a flow of a fluid in a pressurized state in a fluid circuit which comprises a tank for the fluid (6), the arrangement, a first and a second pump (4a, 4b), a steering cylinder (5), and a steering unit (1) for controlling operation of the steering cylinder (5) by controlling discharging the fluid from the steering cylinder (5) towards the tank (6) and charging the fluid pressurized by at least one of the first and second pumps (4a, 4b) to the steering cylinder (5), the arrangement, comprising,
a first flow path including a first inlet (P1) for receiving the fluid from the first pump (4a) and a flow direction control device (C) arranged and configured to prevent a flow of the fluid to the first inlet (P1) in response to a pressure difference across the flow direction control device (C),
a second flow path including a second inlet (P2) for receiving the fluid from the second pump (4b), and an emergency valve (33) for opening of the second flow path comprising and controlled via a control port (33a),
a flow connection between the first and the second flow path arranged in accordance with a position of the flow direction control device (C) between the emergency valve (33) and the first inlet (P1),
a control connection to the control port (33a) for controlling the opening of the second flow path in response to a pressure drop in a section of the fluid circuit between the first pump (4a) and the flow direction control device (C).

2. The arrangement according to any of the preceding claim 1, comprising ports (P, P1,P2) at ends of the first and second flow paths and including the first inlet (P1) and the second inlet (P2),
wherein the first and second flow paths and the ports (P, P1, P2) are provided as a valve unit for connecting to the steering unit (1) and to the first and second pumps (4a, 4b) via conduits at the ports.

3. The arrangement according to claim 1 or 2, comprising a pressure sensor configured and arranged for sensing a pressure in said section.

4. The arrangement according to any of the preceding claims, wherein
the control connection comprises a fluid connection from said section and between the first inlet (P1) and the control port (33a) and the emergency valve (33) is a pressure controlled valve controlled by a pressure in the fluid connection.

5. The arrangement according to claim 4, wherein
the control connection comprises a release valve (34) arranged and controllable for linking the pressure reception port (33a) to the tank (6).

6. The arrangement according to claim 3, wherein
the emergency valve (33) is an electrically actuated valve, the control port (33a) is a control port triggered by a signal and the control connection comprises the pressure sensor and a signal line between the pressure sensor and the control port (33a).

7. The arrangement according to any of the preceding claims, wherein the flow direction control device (C) is a check valve.

8. The arrangement according to any of the preceding claims, comprising a priority valve (31) and alternative outlets (P, B) wherein the priority valve (31) is connected between the alternative outlets (P, B) and the flow direction control device (C) and configured to direct a flow of the fluid from the flow connection between the first and second flow path alternatively to one or another one of the alternative outlets (P, B).

9. The arrangement according to claim 8, wherein the priority valve (31) is connected to and controlled by a load-sensing fluid path in fluid communication with a load-sensing path of the steering unit (1).

10. The arrangement according to claim 9, wherein the load-sensing fluid path comprises a branch comprising the emergency valve (33) and the emergency valve (33) is further arranged, configured and controlled via the control port (33a) for opening the branch and opening the second flow path with parallel valve ways.

11. A hydraulic control unit comprising
the arrangement according to any of the preceding claims and the steering unit (1) connected to each other for forming a section of the of the fluid circuit, wherein the steering unit (1) comprises
a shaft (14)
a by-pass valve (12) and
a metering pump arrangement for providing the controlling of the discharging and charging via the by-pass valve (12), and comprising a set of two metering pumps (11) connected to the shaft (14) for receiving torque from a steering wheel (2), wherein the by-pass valve (12) is connected and configured for switching between fluidically connecting the two of the metering pumps (11) in parallel and fluidically connecting input and output sides of one of the two of the metering pumps (11) with each other.

12. A hydraulic system for a work vehicle, comprising a fluid circuit comprising
a tank for a fluid (6) being a work fluid,
first and second pumps (4a, 4b) for aspirating the fluid from the tank,
a steering cylinder (5),
a section between the first and second pumps (4a, 4b) and the steering cylinder (5) being the hydraulic control unit according to claim 11 or a combination of a steering unit (1) and the arrangement according to any of claims 1 to 10 connected to said steering unit (1), and
a discharge conduit for discharging the fluid from the steering unit (1) of the hydraulic control unit to the tank (6).

13. The hydraulic system for a work vehicle according to claim 12, comprising
the arrangement according to claim 8, 9 or 10,
a connection for a hydraulic brake of a trailer of the work vehicle including one of alternative outlets (B),
wherein another one of alternative outlets (P) is connected to the steering unit (1) for the charging of the fluid.

14. The hydraulic system for a work vehicle according to claim 12 or 13, wherein the first pump (4a) is a power-steering pump and the second pump (4b) is a transmission pump.

15. A use of an arrangement according to any of claims 1 to 10 for supplying pressurized fluid to a steering unit (1) comprising a metering pump arrangement for controlling a steering cylinder (5) by discharging and charging the pressurized fluid and comprising at least one metering pump (11) for controlling the discharging and charging and connected to a shaft (14) for receiving torque from a steering wheel (2).

## Amended claims

### Amended claims in accordance with Rule 137(2) EPC.

1. An arrangement for controlling a flow of a fluid in a pressurized state in a fluid circuit which comprises a tank for the fluid (6), the arrangement, a first and a second pump (4a, 4b), a steering cylinder (5), and a steering unit (1) for controlling operation of the steering cylinder (5) by controlling discharging the fluid from the steering cylinder (5) towards the tank (6) and charging the fluid pressurized by at least one of the first and second pumps (4a, 4b) to the steering cylinder (5), the arrangement, comprising,
a first flow path including a first inlet (P1) for receiving the fluid from the first pump (4a) and a flow direction control device (C) arranged and configured to prevent a flow of the fluid to the first inlet (P1) in response to a pressure difference across the flow direction control device (C),
a second flow path including a second inlet (P2) for receiving the fluid from the second pump (4b), and an emergency valve (33) for opening of the second flow path comprising and controlled via a control port (33a),
a flow connection between the first and the second flow path arranged in accordance with a position of the flow direction control device (C) between the emergency valve (33) and the first inlet (P1),
a control connection to the control port (33a) for controlling the opening of the second flow path in response to a pressure drop in a section of the fluid circuit between the first pump (4a) and the flow direction control device (C), and
ports (P, P1, P2) at ends of the first and second flow paths and including the first inlet (P1) and the second inlet (P2),
**characterized in that**
the first and second flow paths and the ports (P, P1, P2) are provided as a valve unit (3) for connecting to the steering unit (1) and to the first and second pumps (4a, 4b) via conduits at the ports.

2. The arrangement according to claim 1, comprising a pressure sensor configured and arranged for sensing a pressure in said section.

3. The arrangement according to any of the preceding claims, wherein
the control connection comprises a fluid connection from said section and between the first inlet (P1) and the control port (33a) and the emergency valve (33) is a pressure controlled valve controlled by a pressure in the fluid connection.

4. The arrangement according to claim 3, wherein
the control connection comprises a release valve (34) arranged and controllable for linking the pressure reception port (33a) to the tank (6).

5. The arrangement according to claim 2, wherein
the emergency valve (33) is an electrically actuated valve, the control port (33a) is a control port triggered by a signal and the control connection comprises the pressure sensor and a signal line between the pressure sensor and the control port (33a).

6. The arrangement according to any of the preceding claims, wherein the flow direction control device (C) is a check valve.

7. The arrangement according to any of the preceding claims, comprising a priority valve (31) and alternative outlets (P, B) wherein the priority valve (31) is connected between the alternative outlets (P, B) and the flow direction control device (C) and configured to direct a flow of the fluid from the flow connection between the first and second flow path alternatively to one or another one of the alternative outlets (P, B).

8. The arrangement according to claim 7, wherein the priority valve (31) is connected to and controlled by a load-sensing fluid path in fluid communication with a load-sensing path of the steering unit (1).

9. The arrangement according to claim 8, wherein the load-sensing fluid path comprises a branch comprising the emergency valve (33) and the emergency valve (33) is further arranged, configured and controlled via the control port (33a) for opening the branch and opening the second flow path with parallel valve ways.

10. A hydraulic control unit comprising
the arrangement according to any of the preceding claims and the steering unit (1) connected to each other for forming a section of the of the fluid circuit, wherein the steering unit (1) comprises
a shaft (14)
a by-pass valve (12) and
a metering pump arrangement for providing the controlling of the discharging and charging via the by-pass valve (12), and comprising a set of two metering pumps (11) connected to the shaft (14) for receiving torque from a steering wheel (2), wherein the by-pass valve (12) is connected and configured for switching between fluidically connecting the two of the metering pumps (11) in parallel and fluidically connecting input and output sides of one of the two of the metering pumps (11) with each other.

11. A hydraulic system for a work vehicle, comprising a fluid circuit comprising
a tank for a fluid (6) being a work fluid,
first and second pumps (4a, 4b) for aspirating the fluid from the tank,
a steering cylinder (5),
a section between the first and second pumps (4a, 4b) and the steering cylinder (5) being the hydraulic control unit according to claim 10 or a combination of a steering unit (1) and the arrangement according to any of claims 1 to 9 connected to said steering unit (1), and
a discharge conduit for discharging the fluid from the steering unit (1) of the hydraulic control unit to the tank (6).

12. The hydraulic system for a work vehicle according to claim 11, comprising
the arrangement according to claim 7, 8, or 9,
a connection for a hydraulic brake of a trailer of the work vehicle including one of alternative outlets (B),
wherein another one of alternative outlets (P) is connected to the steering unit (1) for the charging of the fluid.

13. The hydraulic system for a work vehicle according to claim 11 or 12, wherein the first pump (4a) is a power-steering pump and the second pump (4b) is a transmission pump.

14. A use of an arrangement according to any of claims 1 to 9 for supplying pressurized fluid to a steering unit (1) comprising a metering pump arrangement for controlling a steering cylinder (5) by discharging and charging the pressurized fluid and comprising at least one metering pump (11) for controlling the discharging and charging and connected to a shaft (14) for receiving torque from a steering wheel (2).
